# NEUE EUROPÄISCHE PATENTSCHRIFT

(11) **EP 0 786 302 B2**
(45) Veröffentlichungstag und Bekanntmachung des Hinweises auf die Entscheidung über den Einspruch: **16.04.2008**
(45) Hinweis auf die Patenterteilung: 19.06.2002
(21) Anmeldenummer: 96121012.7
(22) Anmeldetag: 31.12.1996
(51) Int. Cl.: B23D 61/12

(54) **Sägeblatt für eine oszillierende Maschinensäge**
Sawblade for a reciprocating saw
Lame de scie pour une scie alternative

(30) Priorität: 15.01.1996 DE 29600567 U
(43) Veröffentlichungstag der Anmeldung: 30.07.1997
(73) Patentinhaber: Wilh. Putsch GmbH & Co. KG, 42855 Remscheid (DE)
(72) Erfinder: Schramm, Norbert, 42853 Remscheid (DE)
(74) Vertreter: Füssel, Michael

(56) Entgegenhaltungen:
- WO-A-85/03473
- CH-A- 182 470
- DE-A- 2 312 951
- DE-C- 46 344
- DE-U- 83 379 371
- FR-A- 1 137 992
- FR-A- 2 232 392
- GB-A- 688 299
- GB-A- 773 444
- GB-A- 1 359 158
- US-A- 3 554 197
- US-A- 3 939 741
- Katalog "75 Jahre Scintilla"(Fa. Scintilla AG-CH 4501 Solothurn, 1992)

## Beschreibung

Die vorliegende Erfindung betrifft ein Sägeblatt für eine Säbelsäge oder Stichsäge nach Anspruch 1.

Derartige Sägeblätter sind z.B. aus dem Prospekt WILPU "Sägenhaft", 1995 bekannt für Säbelsägen, Stichsägen.

Allen Sägeblättern ist gemeinsam zu eigen, daß sie mittels des oszillierenden Maschinensägenantriebs in eine hinund hergehende Bewegung versetzt werden, wobei sie üblicherweise in der einen Hubrichtung einen Sägeschnitt ausführen und in der anderen Hubrichtung nichtsägend in die Ausgangsposition zurückgeführt werden, um dann erneut einen Sägehub auszuführen.

Derartige Sägeblätter sind auch bekannt für sogenannte Bügelsägen, das sind durch Kurbeltrieb bewegte Hubsägen, bei denen das Sägeblatt in einer Hubrichtung angehoben und in der anderen Hubrichtung auf das zu sägende Material abgelassen wird.

Obwohl sich derartige Sägeblätter in Verbindung mit derart oszillierenden Maschinensägen in der Praxis hervorragend behauptet und bewährt haben, besteht ein wesentlicher Nachteil darin, daß für jeden Sägehub ein sogenannter Leerhub vollzogen werden muß, bei welchem die Sägezähne des Sägeblattes mit ihrer Zahnrückenfläche über das zu sägende Material laufen, was an sich unerwünscht ist.

Dem kann man zwar durch Härten der Zähne ohne weiteres begegnen, dennoch wäre eine effektivere Verwendung derartiger Sägeblätter oftmals wünschenswert.

Weiterhin sind aus der CH PS 182 470 Sägeblätter bekannt, die eine Verzahnung aufweisen, welche so ausgeführt ist, daß bei einer Vollgattersäge ein Sägehub sowohl auf dem Hinhub als auch auf dem Rückhub ausgeführt wird. Hierzu sind an jedem Zahn drei Schneidespitzen vorgesehen.

Ein weiteres Sägeblatt für Vollgattersägen, bei denen ein Sägehub sowohl auf dem Hinhub als auch auf dem Rüchhub erfoglt, ist aus der DE 46 344 C bekannt.

Die dort offenbarten Doppelzähne sind jeweils in sich geschränkt.

Der Erfindung liegt daher die Aufgabe zugrunde, unter Beibehaltung der üblichen Arbeitszyklen von Säbelsägen oder Stichsägen ein Sägeblatt zu schaffen, welches einen effektiveren Einsatz mit hoher Standzeit ermöglicht.

Diese Aufgabe löst die Erfindung mit den Sägeblättern gemäß den Merkmalen des Hauptanspruchs.

Aus der Erfindung ergibt sich zunächst einmal der Vorteil, daß derartige Sägeblätter unter erheblicher Verschleißvermeidung mit nahezu doppelter Vortriebsgeschwindigkeit bei ansonsten unveränderter Hubzahl und unverändertem Sägenhub geführt werden können.

Dieser Vorteil wird dadurch erreicht, daß die bislang ungenutzte Leerhubbewegung der Säbelsäge oder Stichsäge nunmehr auch zur Ausübung eines Sägehubes ausgenutzt wird. Praktisch gesehen sind hierfür die für die Gegenhubrichtung vorgesehenen Gegenhubzähne verantwortlich, so daß ohne Veränderung an der Säbelsäge oder Stichsäge von der oszillierenden Bewegung des Sägeblattantriebs nunmehr sowohl der Hinhub als auch der Rückhub genutzt wird.

Bei jeder der Hubbewegungen wird daher das Sägeblatt mit seinem hierfür jeweils vorgesehenen Sägezähnen mit dem zu sägenden Material in Eingriff gebracht, so daß prinzipiell von einer doppelten Vortriebsgeschwindigkeit ausgegangen werden kann.

Dabei ist der Aufwand für die Erfindung, gemessen am Fortschritt, äußerst gering.

Für die Erfindung genügt es prinzipiell, an den bisherigen Rückseiten der Sägezähne, den sogenannten Freiflächen, jeweils einen umgekehrt stehenden Sägezahn anzubringen, der mit seiner Spanfläche einer entsprechenden Spanfläche des benachbarten Sägezahns für den Hinhub gegenübersteht.

Wesentlich für die Erfindung ist nun, daß auf diese Weise ein Doppelzahn entsteht, und daß eine Vielzahl von derartigen Doppelzähnen über die Länge des Sägeblatts verteilt angeordnet werden, deren Zahnspitzen alle einheitlich auf einer einzigen Zahnlinie enden und von denen die beiden Zahnspitzen jedes Doppelzahns in die jeweils gleiche Richtung und um das jeweils gleiche Maß geschränkt ist, wobei benachbarte Doppelzähne in jeweils entgegengesetzte Richtungen zu schränken sind.

Auf diese Weise wird erreicht, daß der z.B. beim Hinhub vorauslaufende Sägezahn einen Span aus dem zu sägenden Material heraustrennt, welcher sich auf der Spanfläche des vorauslaufenden Sägezahns abstützt und dort bricht. Der nachlaufende Sägezahn fährt zwar mit seiner Freifläche voraus in den soeben eingebrachten Sägeschnitt des vorausfahrenden Sägezahns, gerät jedoch nicht in sägenden Eingriff mit dem zu sägenden Material, weil der vorausfahrende Sägezahn den Weg für den nachlaufenden Sägezahn freigeräumt hat.

Auf diese Weise wird die Zahnspitze des nachlaufenden Sägezahns ihre Schärfe für die entgegengesetzte Hubrichtung über lange Zeit hinweg behalten, so daß prinzipiell auch die Standzeit derartiger Sägeblätter erhöht wird.

Auf diese Weise bleibt die Zahnspitze des jeweils nachfolgenden Sägezahns auch bei sogenannten Pendelhubbewegungen im wesentlichen berührungslos, zumindest erfolgt praktisch keine Berührung, welche die Zahnschärfe negativ beeinträchtigen könnte, obwohl der nachlaufende Sägezahn mit seiner Freifläche vorausfährt.

Will man eine vorzeitige Schwächung der Zahnspitzenbereiche in Sägerichtung vermeiden, empfiehlt es sich, die Spanwinkel jedes Sägezahns praktisch als rechte Winkel auszuführen.

Von der Erfindung abzugrenzen sind prinzipiell die sogenannten M-Zähne bei Grünholz-Sägeblättern, die zwischen den eigentlichen Sägezähnen angeordnet sind und hinter deren Zahnspitzen-Verbindungslinien zurückspringen.

Derartige M-Zähne sitzen in den Zahnlücken der angeschärften Sägezähne und dienen dem Zweck, die in die Zahnlükken einfallenden Sägespäne bei der Sägebewegung mitzunehmen, den Sägespalt praktisch freizuräumen.

Derartige M-Zähne sind im Gegensatz zu den Sägezähnen nach dieser Erfindung weder geschärft noch geschränkt. Sie liegen genau in der Sägeblattebene, haben keine Schneidfunktion sondern lediglich Räumfunktion.

Ihre Zahnspitzen springen insbesondere hinter der Zahnspitzenlinie deutlich zurück, können daher bereits aus diesem Grunde nicht am Sägevorgang beteiligt sein.

Es kommt daher wesentlich darauf an, daß die Sägezähne nach dieser Erfindung einerseits geschärft und andererseits im Umfang der entstehenden Doppelzähne in jeweils eine Richtung geschränkt sind.

Obwohl im Rahmen der Erfindung auch Doppelzähne mit M-Aufrißbild auftreten können, ist dies keine Einschränkung der Erfindung auf derartige Verzahnungen.

Die Verzahnung nach dieser Erfindung setzt sich prinzipiell aus lediglich einer einzigen Zahnform zusammen, wobei benachbarte Zähne relativ zueinander jeweils in umgekehrte Richtung stehen, vorteilhafterweise jedoch derart dicht zueinander benachbart sind, daß die Freiflächen, also die jeweiligen Zahnrückenseiten, auf einer Linie zusammenstoßen, die zwischen der Zahnfußlinie und der Zahnspitzenlinie liegt, bevorzugt im oberen Drittel von der Zahnspitzenlinie aus gesehen.

Vorteilhafte Weiterbildungen sind den Unteransprüchen zu entnehmen. Im folgenden wird die Erfindung anhand von Ausführungsbeispielen näher erläutert. Es zeigen
- Fig.1: ein erstes Ausführungsbeispiel der Erfindung,
- Fig.2: eine Ansicht des Ausführungsbeispiels gemäß Fig.1 aus Sicht entlang der Linie II-II,
- Fig.3: ein weiteres Ausführungsbeispiel der Erfindung für den Zweirichtungsschnitt,
- Fig.4: ein allgemeines Ausführungsbeispiel der Erfindung,
- Fig.5: eine mögliche Verschränkung des Sägeblatts gemäß Fig.4, und
- Fig.6: eine weitere mögliche Verschränkung des Sägeblatts gemäß Fig.4.

Sofern im folgenden nichts anderes gesagt ist, gilt die folgende Beschreibung stets für alle Figuren.

Die Figuren zeigen ein Sägeblatt 1 für eine,- nicht gezeigte -, Säbelsäge oder Stichsäge.

Derartiges Sägeblatt weist an zumindest einer seiner Randkanten 2 eine Verzahnung auf, derartige Verzahnung besteht aus einzelnen aufeinanderfolgenden Sägezähnen, von denen jeder sowohl geschärft als auch geschränkt ist.

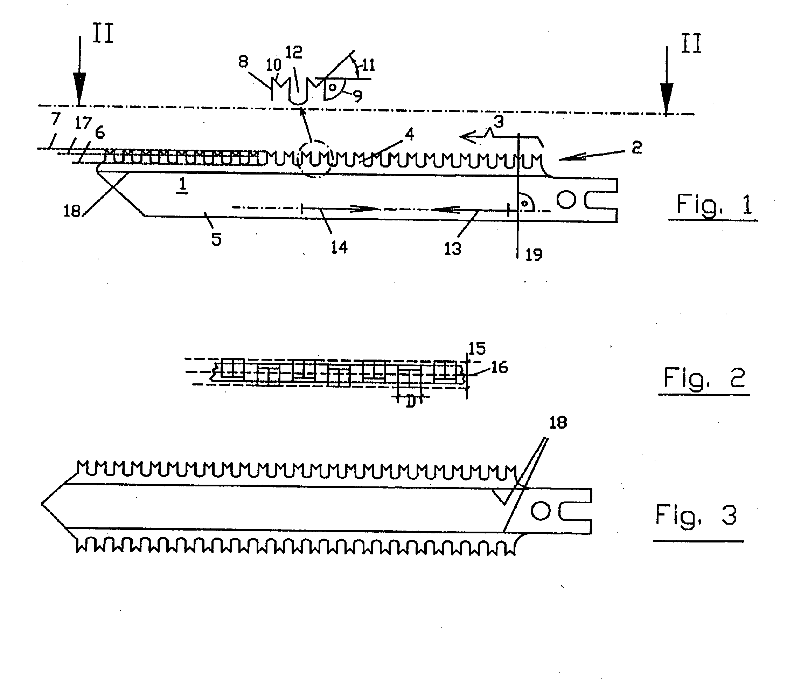

Im Falle der Fig.1 weist die den Sägezähnen 4 gegenüberliegende Randkante einen nicht gezahnten Sägeblatt-Rückenbereich 5 auf.

Hiervon unterscheidet sich das Ausführungsbeispiel gemäß Fig.3 durch Anordnung von Sägezähnen 4 entlang beider sich gegenüberliegenden Längskanten des Sägeblattes 1.

Für beide Ausführungsbeispiele gilt, daß die Zahnspitzen aller auf einer Seite des Sägeblattes 1 liegenden Sägezähne 4 auf einer einzigen Zahnspitzenlinie 7 enden, wobei die Sägezähne 4 in beiden Fällen von jeweils einer gemeinsamen Zahnfußlinie 6 ausgehen, welche die Zahnfüße jedes einzelnen Sägezahns 4 miteinander verbindet.

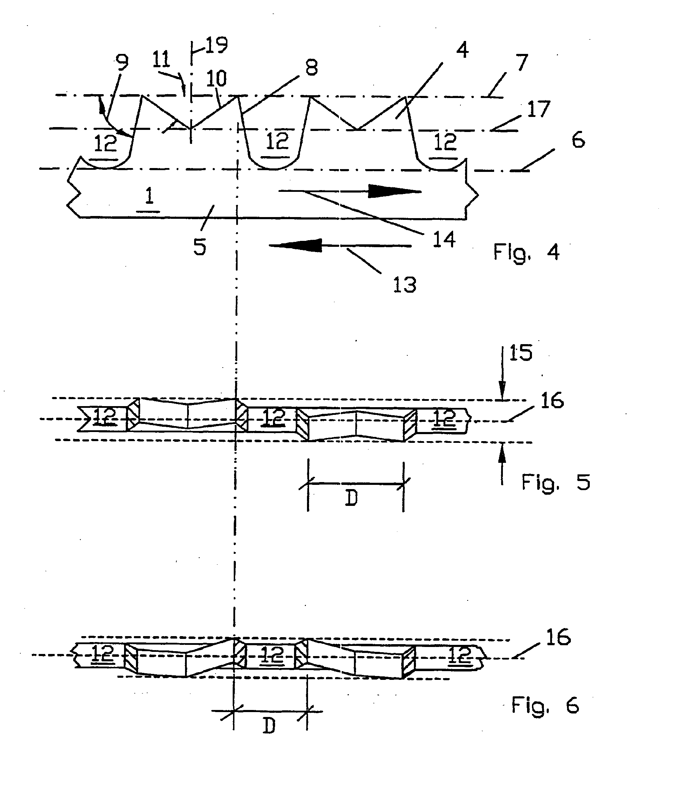

Die Bezeichnung der weiteren Sägezahnmerkmale wird nun anhand der Fig.1 (siehe vergrößerte Teilfigur) bzw. der Fig.4 vorgenommen.

Jede der gezeigten Verzahnungen ist für eine vorgegebene Hubrichtung, z.B. 13 ausgelegt. In diesem Fall fährt jeder Sägezahn 4 mit seiner Spanfläche 8 voraus in das zu sägende Material und schält aus diesem einen entsprechenden Span heraus.

Hierzu muß der Spanwinkel 9 innerhalb eines bestimmten Winkelbereichs liegen, so daß der Sägespan auch gut fließt und dabei eine Schwächung des Zahnspitzenbereichs weitgehend vermieden wird. In ablaufender Richtung schließt sich an die Spanfläche 8 die sogenannte Freifläche 10 an, die mit der Sägenut im zu sägenden Material den sogenannten Freiwinkel 11 einschließt. Zwischen zwei jeweils benachbarten Zähnen 4 sind sogenannte Zahnlücken 12 ausgebildet, Bereiche, in denen sich grundsätzlich der ablaufende Span, der beim Sägen abgeschält wird, einfinden soll.

Derartige Sägeblätter sind in beiden möglichen Längsrichtungen angetrieben, von denen die eine mit Hubrichtung 13 und die entgegengesetzte mit: Gegenhubrichtung 14 bezeichnet ist.

Wesentlich ist nun, daß auf jeden Sägezahn für die eine Hubrichtung, z.B.13, ein umgekehrt stehender Sägezahn für die entgegengesetzte Hubrichtung 14 folgt, der hier als Gegenhubzahn bezeichnet werden kann. Dabei bilden diese beiden Zähne einen sogenannten Doppelzahn D (siehe Fig.2,5,6), von denen jeweils einer für eine der Hubrichtungen im Sägeeingriff ist und der andere ohne Sägefunktion im Material abläuft.

Wesentlich ist nun, daß die beiden Zähne jedes Doppelzahns sowohl in die jeweils gleiche Richtung und um das jeweils gleiche Maß geschränkt sind und daß aufeinanderfolgende Doppelzähne entgegengesetzt geschränkt sind.

Dies läßt sich anhand der Fig.2,5 und 6 verdeutlichen. Bezüglich der mittleren Sägeblattebene 16 erstreckt sich beidseits zu dieser ein sogenannter rechter bzw. linker Schränkbereich. Beide Schränkbereiche werden durch die sogenannte Schränkbreite 15 begrenzt. Die Schränkbreite 15 definiert die jeweils äußerst ausgebogene Position der einzelnen Sägezähne 4, die zu jeweils einer der Seiten des Sägeblattes liegen und mit ihren Zahnspitzen auf einer gemeinsamen Einhüllenden liegen, beide Einhüllende definieren die Schränkbreite 15.

Ein derartiger Doppelzahn wird daher stets gebildet von zwei Zahnspitzen, von denen jeweils zwei sich gegenüberliegende Spanflächen definiert werden, die zwischen sich einen nicht sägenden Zahnfreiflächenbereich aufspannen. Von daher gibt es ohne Einschränkung der Erfindung zwei verschiedene Möglichkeiten, derartige Sägeblätter zu schränken, ohne die Erfindung zu verlassen. Dies ist anhand der Fig.5 und 6 erläutert. Die Fig.5 und 6 enthalten eine Aufsicht von oben auf die beiden Doppelzähne gemäß Fig.4.

Die Definition der Spanwinkel und Freiwinkel ist hier nur qualitativ. Die Zahnspitzen jedes Doppelzahns sind durch eine in Richtung zur Zahnfußlinie 6 gehende Vertiefung voneinander getrennt. Dies kann einerseits die bis zur Zahnfußlinie 6 gehende Zahnlücke 12 sein, andererseits auch eine beliebige Vertiefung zwischen zwei aufeinanderfolgenden Zahnspitzen. In jedem Falle sind die Spanflächen 8 entsprechend den Erfordernissen um einen Spanwinkel 9 zur Zahnspitzenlinie 7 geneigt. Dann besteht die Möglichkeit gemäß Fig.5, die beiden Zahnspitzen zwischen zwei aufeinanderfolgenden Zahnlücken 12 als Doppelzahn anzusehen. Ein derartiger Doppelzahn ist dann von einem Zahnfußraum 12 zum nächsten Zahnfußraum 12 zu einer der beiden Seiten bezüglich der mittleren Sägeblattebene 16 zu schränken. Für den hierzu benachbarten Doppelzahn gilt: Schränkung in die entgegengesetze Richtung.

Andererseits besteht auch die Möglichkeit,- entsprechende Zahngeometrie vorausgesetzt -, die beiden jeweils einem Zahn einer Zahnlücke 12 benachbarten Zahnspitzen als Doppelzahn anzusehen. Wie Fig.6 hierzu zeigt, ist für die mittlere Zahnlücke 12 eine derartige Definition getroffen. Für diesen Fall entstehen die Doppelzähne D jeweils rechts und links zu einer bis an die Zahnfußlinie 6 heranreichenden Zahnlücke 12 und sind dann entsprechend zu jeweils einer Seite der mittleren Sägeblattebene 16 zu schränken.

Es soll daher für die Erfindung prinzipiell unerheblich sein, ob ein Doppelzahn D durch zwei bis an die Zahnfußlinie 6 heranreichende Zahnlücken 12 begrenzt wird oder,- wie im Falle der Fig.6 -, ob zwischen den Zahnspitzen eines Doppelzahns D eine derartige Zahnlücke 12 angeordnet ist.

Beide Ausführungsbeispiele sind, entsprechende Zahngeometrien vorausgesetzt, gleichwertig.

Ferner zeigen Fig.1 und 2, daß die Spanwinkel 9 jedes einzelnen Sägezahns 4 praktisch 90° sind. Hierzu schließen die Spanflächen 8 der Sägezähne 4 im Bereich der Zahnspitzen mit der Zahnspitzenlinie 7 einen Winkel von im wesentlichen 90° ein.

Hieraus ergibt sich der Vorteil einer hohen Zahnstandfestigkeit, ferner wird ein Festfressen der Säge im wesentlichen verhindert.

Ferner zeigt Fig.1 ein bevorzugtes Ausführungsbeispiel. Hier stoßen die Freiflächen 10 jedes Doppelzahns zwischen der Zahnfußlinie 6 und der Zahnspitzenlinie 7 zusammen, vorzugsweise liegt die entstehende Stoßlinie 17, welche die Verbindungslinie der entstehenden Stoßstellen ist, im oberen Drittel zwischen Zahnspitzenlinie 7 und Zahnfußlinie 6.

Zur Erzielung eines gleichmäßigen Spanabflusses kann es zusätzliche Vorteile bringen, wenn die Spanflächen 8 im wesentlichen über die gesamte Zahnhöhe zwischen Zahnfußlinie 6 und Zahnspitzenlinie 7 im wesentlichen senkrecht zur Zahnspitzenlinie verlaufen, wobei eine gewisse Ausrundung im Zahnfußbereich anzustreben ist.

Ferner ist verwirklicht, daß das Sägeblatt gemäß Fig.1 ausschließlich Doppelzähne nach dieser Erfindung aufweist. Um einem Verschleiß zusätzlich entgegenzuwirken, wird vorgeschlagen, den Zahnbereich des Sägeblattes im Verhältnis zum nicht gezahnten Rückenbereich 5 aus härterem Material zu fertigen. Für sogenannte Bimetall/Trimetall-Sägeblätter wird für den Zahnbereich eine Härte 65 HRC und für den nichtgezahnten Rückenbereich eine Härte 50 HRC angestrebt.

Die beiden Materialien sind entlang der Schweißnaht 18/der Schweißnähte 18 miteinander verschweißt.

Da in allen gezeigten Fällen jeder Doppelzahn D bezüglich einer auf der Hubrichtung (Gegenhubrichtung) stehenden Symmetrieachse 19 symmetrisch ist, darf sowohl für den Hinhub als auch für den Gegenhub eine identische Sägeleistung erwartet werden.

### Bezugszeichenaufstellung:

- 1: Sägeblatt
- 2: Randkante
- 3: Verzahnung
- 4: Sägezahn
- 5: nichtgezahnter Sägeblattrückenbereich
- 6: Zahnfußlinie
- 7: Zahnspitzenlinie
- 8: Spanfläche
- 9: Spanwinkel
- 10: Freifläche
- 11: Freiwinkel
- 12: Zahnlücke
- 13: Hubrichtung
- 14: Gegenhubrichtung
- 15: Schränkbreite
- 16: mittlere Sägeblattebene
- 17: Stoßlinie
- 18: Schweißnaht
- 19: Symmetrieachse

## Patentansprüche

1. Sägeblatt (1) für eine in einer Längsrichtung oszillierende maschinell angetriebene Säbelsäge oder Stichsäge, mit zwei sich gegenüber liegenden Randkanten (2), welches an zumindest einer seiner Längsrichtung verlaufenden Randkanten (2) eine Verzahnung (3) aus einzelnen aufeinanderfolgenden Sägezähnen (4) aufweist, deren Zahnspitzen auf einer einzigen Zahnspitzenlinie (7) liegen und die wechselweise aus der mittleren Sägeblattebene (16) in die eine und in die andere Richtung geschränkt sind, wobei auf der Rückseite jedes Sägezahns (4) für die eine Hubrichtung (13) ein umgekehrt stehender Gegenhubzahn für die entgegengesetzte Hubrichtung (14) folgt, wobei das Sägeblatt in der einen Hubrichtung mit ihrer Spanfläche vorauslaufende Sagezähne aufweist, die in diesen Hubrichtung einen Sägehub ausführen und dass zur Erzielung eines weiteren Sägehubs beim Rückhub die Gegenhubzähne vorgesehen sind, wobei
1.1 Sägezahn und Gegenhubzahn in die jeweils gleiche Richtung zu einer der beiden Seiten bezüglich der mittleren Sägeblattebene und um das jeweils gleiche Maß geschränkt sind, und auf diese Weise einen Doppelzahn (D) bilden,
1.2 aufeinanderfolgende Doppelzähne (D) entgegengesetzt geschränkt sind,
1.3 der Bereich des Sägeblatts mit den Doppelzähnen (D) im Verhältnis zum nicht gezahnten Rückenbereich (5) aus härterem Material besteht, wobei
1.3.1 die beiden Materialien entlang jeweils einer Schweißnaht (18) als Bimetall bzw. Trimetall miteinander verschweißt sind, wobei
1.4 die Spanwinkel (9) jedes Sägezahnes und jedes Gegenhubzahnes praktisch 90° sind.

2. Sägeblatt nach Anspruch 1 oder 2, **dadurch gekennzeichnet, daß** die Freiflächen jedes Doppelzahnes (D) zwischen der Zahnfußlinie und der Zahnspitzenlinie zusammenstoßen, vorteilhafterweise im oberen Drittel von der Zahnspitzenlinie (7) aus betrachtet.

3. Sägeblatt nach einem oder mehreren der Ansprüche 1 bis 3, **dadurch gekennzeichnet, daß** die Spanflächen jedes Doppelzahnes (D) im wesentlichen über die gesamte Zahnhöhe zwischen Zahnfußlinie (6) und Zahnspitzenlinie (7) senkrecht zur Zahnspitzenlinie (7) stehen und lediglich im Zahnfußbereich konkav ausgerundet sind.

4. Sägeblatt nach einem oder mehreren der Ansprüche 1 bis 4, **dadurch gekennzeichnet, daß** das Sägeblatt (1) ausschließlich Doppelzähne (D) aufweist.

5. Sägeblatt nach einem oder mehreren der Ansprüche 1 bis 5, **dadurch gekennzeichnet, daß** jeder Doppelzahn (D) bezüglich einer senkrecht auf der Hubrichtung (13) bzw. Gegenhubrichtung (14) stehenden Achse (19) symmetrisch ist.

## Claims

1. Saw blade (1) for a machine-driven sabre saw or compass saw oscillating in a longitudinal direction, having two opposite-lying boundary edges (2), which comprises on at least one of its boundary edges (2) extending in the longitudinal direction a toothed arrangement (3) consisting of individual consecutive saw teeth (4), of which the tooth peaks lie on a single tooth peak line (7) and are set alternately from the middle saw blade plane (16) in one direction and in the other direction, wherein on the rear side of each saw tooth (4) for the one stroke direction (13) an opposite counter-stroke tooth follows for the opposed stroke direction (14), wherein the saw blade comprises in one stroke direction saw teeth which extend forwardly with their cutting surface and in this stroke direction perform a saw stroke, and in that the counter-stroke teeth are provided to perform a further saw stoke for the reverse stroke, wherein
1.1 the saw tooth and counter-stroke tooth are set in each case in the same direction on one of the two sides with respect to the middle saw blade plane and are set in each case by the same measurement and in this way form a double tooth (D),
1.2 consecutive double teeth (D) are set in opposition,
1.3 the region of the saw blade having the double teeth (D) in relation to the non-toothed rear region (5) consists of harder material, wherein
1.3.1 the two materials are welded together in each case along a weld seam (18) as a bimetal or tri-metal, wherein
1.4 the cutting angles (9) of each saw tooth and each counter-stroke tooth are practically 90°.

2. Saw blade according to claim 1, **characterised in that** the free surfaces of each double tooth (D) collide between the tooth base line and the tooth peak line, advantageously in the upper third when viewed from the tooth peak line (7).

3. Saw blade according to any one or several of claims 1 or 2, **characterised in that** the cutting surfaces of each double tooth (D) are positioned substantially over the entire tooth height between the tooth base line (6) and the tooth peak line (7) in a perpendicular manner with respect to the tooth peak line (7) and are concavely rounded merely in the tooth base region.

4. Saw blade according to any one or several of claims 1 to 3, **characterised in that** the saw blade (1) comprises exclusively double teeth (D).

5. Saw blade according to any one or several of claims 1 to 4, **characterised in that** each double tooth (D) is symmetrical with respect to an axis (19) which is perpendicular in the stroke direction (13) or counter-stroke direction (14).

## Revendications

1. Lame de scie (1) pour une scie sabre ou une scie à guichet entraînée mécaniquement suivant un mouvement alternatif dans un sens longitudinal, qui est pourvue de deux bords opposés (2) et qui présente sur l'un au moins de ses bords (2) s'étendant longitudinalement une denture (3) formée de dents de scie individuelles (4) qui se suivent, dont les pointes se trouvent sur une seule ligne de pointes de dents (7) et qui sont inclinées alternativement dans un sens et dans l'autre par rapport au plan médian de lame de scie (16), étant précisé que le côté arrière de chaque dent de scie (4) prévue pour un sens de course (13) est suivi par une dent de course opposée pour le sens de course opposé (14), et que la lame de scie présente dans un sens de course des dents dont la face de coupe est située en avant et qui décrivent dans ce sens de course une course de sciage, tandis que pour obtenir une autre course de sciage lors de la course de retour, on prévoit les dents de course opposée,
1.1 les dents de scie et les dents de course opposées étant inclinées dans le même sens vers l'un des deux côtés par rapport au plan médian de lame de scie, et selon le même degré, et formant ainsi une dent double (D),
1.2 les dents doubles (D) qui se suivent étant inclinées en sens inverse,
1.3 la zone de la lame de scie qui présente les dents doubles (D) se composant d'un matériau plus dur que la zone arrière non dentée (5),
1.3.1 les deux matériaux étant soudés ensemble le long d'un cordon de soudure (18), sous la forme d'une pièce bimétallique ou trimétallique,
1.4 les angles de coupe (9) de chaque dent de scie et de chaque dent de course opposée étant pratiquement de 90°.

2. Lame de scie selon la revendication 1, **caractérisée en ce que** les faces en dépouille de chaque dent double (D) se rejoignent entre la ligne des bases de dents et la ligne des pointes de dents, avantageusement dans le tiers supérieur à partir de la ligne des pointes de dents (7).

3. Lame de scie selon la revendication 1 ou 2, **caractérisée en ce que** les faces de coupe de chaque dent double (D) sont perpendiculaires à la ligne des pointes de dents (7) pratiquement sur toute la hauteur des dents entre la ligne des bases de dents (6) et ladite ligne des pointes de dents (7), et n'ont une forme arrondie concave que dans la zone de la base des dents.

4. Lame de scie selon l'une au moins des revendications 1 à 3, **caractérisée en ce qu'**elle présente uniquement des dents doubles (D).

5. Lame de scie selon l'une au moins des revendications 1 à 4, **caractérisée en ce que** chaque dent double (D) est symétrique par rapport à un axe (19) perpendiculaire au sens de course (13) et au sens de course opposé (14).
